# EUROPEAN PATENT APPLICATION

(11) **EP 1 894 456 A1**
(43) Date of publication of application: **05.03.2008**
(21) Application number: 06757307.1
(22) Date of filing: 13.06.2006
(51) Int. Cl.: A01B 33/08, A01B 33/02

(54) **CLUTCH LEVER DEVICE**

(30) Priority: 15.06.2005 JP 2005175716
(71) Applicant: Starting Industrial Co., Ltd., Tokyo, 1670034 (JP)
(72) Inventor: KATO, Hiroki, Starting Industrial Co., Ltd., Tokyo 167-0034 (JP)
(74) Representative: Wright, Howard Hugh Burnby
(86) International application number: PCT/JP2006/311872
(87) International publication number: WO 2006/134943

(57) **Abstract**

[PROBLEMS] A clutch lever device capable of performing switching operation stably and high reliably.

[MEANS FOR DOLVING PROBLEMS] A lever device in which a clutch lever (10) for performing pulling operation of a control wire (7) is pivotally supported at a support member (9) fixed to a handle, a lock lever (11) is supported by the clutch lever (10) , and, when the clutch lever (10) is pulled from an initial position, the lock lever (11) is engaged with an engagement section (16) of the support member (9) to lock the clutch lever (10) in a pulled state. A switch (21) is provided at the support member (9), and when the switch (21) detects that the clutch lever (10) is in the locked state, it disables the start of an engine.

## Description

### Technical Field

The present invention relates to a clutch lever device for disabling the start of an engine when a clutch lever is pulled.

### Background Art

In general, a handle of a maintenance machine such as a cultivator, a rice planter, a lawn mower, or the like is provided with a clutch lever. As shown in Patent Document 1, a maintenance machine main body is provided with a belt connecting an engine and a transmission and a tension roller is disposed at a middle position of the belt. The tension roller is provided to one end of a support shaft pivoted for freely turning on the main body. A middle portion of the shaft body is coupled to a clutch lever through a wire. When the clutch lever is pulled, the wire turns the support shaft and the tension roller applies tension to the belt to thereby connect the engine and the transmission to transmit power of the engine to the transmission.

Furthermore, a lock lever is normally provided in a vicinity of the clutch lever and the lock lever operates together with the clutch lever. When the clutch lever is pulled sufficiently, the lock lever is locked in the state. Otherwise, an operator has to keep gripping the clutch lever during the operation.

However, if the clutch lever is locked in the pulled state by the lock lever when the clutch lever is pulled, unlocking of the clutch lever after the engine is turned off may be forgotten in some cases. If the engine is started again in this state, the maintenance machine suddenly starts moving and may cause an unexpected accident, because the engine and the transmission are connected to each other.

Therefore, there is known art in which a switch for operating as the shaft body of the tension roller turns about one end is provided to enable the engine to start only when the support shaft is in a state before turning.
Patent Document 1: Japanese Patent Application Laid-open No. 11-146701

### Disclosure of the Invention

### Problems to be Solved by the Invention

However, because the switch is provided to the maintenance machine main body, the switch is soiled when it is spattered with mud or splashed with water during operation. Moreover, water is splashed over the maintenance machine main body to clean the main body and therefore the switch is splashed with water. As a result, there is the problem that operation of the switch is likely to become unstable.

Furthermore, while the switch is small and precision is required of it, such high precision is not required of an angle of the shaft body of the tension roller. Therefore, if either one of the both does not have high precision, it is impossible to obtain a highly reliable function.

It is an object of the invention to provide a highly reliable clutch lever device capable of solving the above problems and performing switching operation stably.

### Means for Solving the Problems

To achieve the above object, according to the invention of claim 1, there is provided a clutch lever device in which a clutch lever for performing pulling operation of a control wire is pivotally supported at a support member fixed to a handle, a lock lever is supported by the clutch lever, and, when the clutch lever is pulled from an initial position, the lock lever is engaged with an engagement section of the support member to lock the clutch lever in a pulled state, wherein a switch is provided at the support member and, when the switch detects that the clutch lever is in the locked state, it disables the start of an engine.

According to the invention of claim 2, the switch detects that the lock lever in place of the clutch lever is in the locked state.

### Effects of the Invention

With the invention of claim 1, if the clutch lever is pulled and brought into the locked state, the switch detects it and disables the start of the engine and therefore the engine cannot be started as long as the clutch lever is in the pulled state. Because the switch is provided to the support member of the clutch lever that is positioned high away from the ground, mud and water hardly adhere to the switch during the operation. Moreover, the clutch lever stops in a predetermined position and therefore the switch can be related to the lever and actuated stably. As a result, it is possible to provide the highly reliable clutch lever device onto the market.

With the invention of claim 2, because the lock lever stops in a predetermined position in the locked state similarly to the clutch lever, the switch can be related to the lever and actuated stably.

### Best Mode for Carrying out the Invention

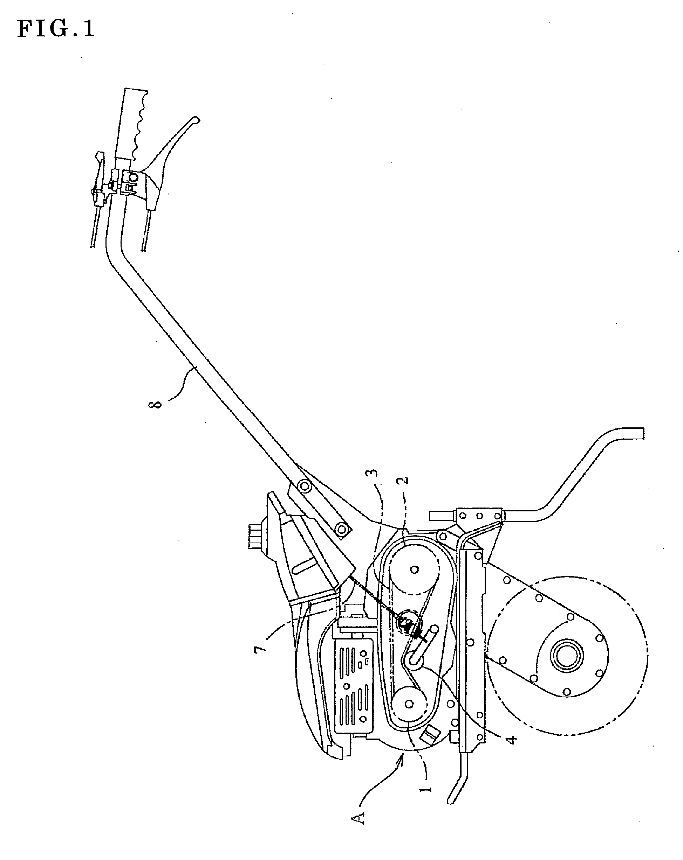

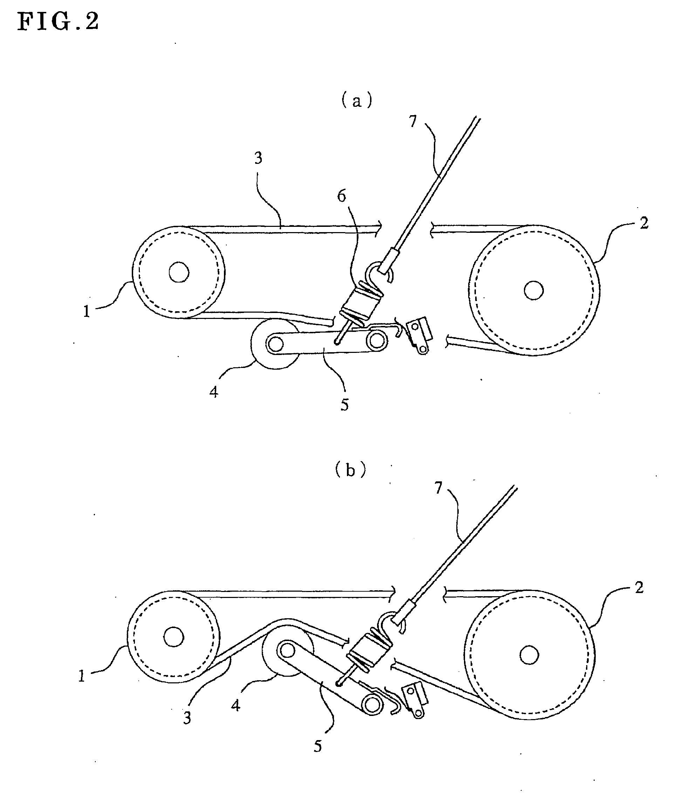

FIG. 1 is a side view of a maintenance machine and FIGS. 2(a), 2(b) are enlarged views of a part of the machine. A maintenance machine main body A is provided with a pulley 1 operatively coupled to an engine and a pulley 2 operatively coupled to a transmission and a belt 3 is looped over both the pulleys 1, 2. A tension roller 4 is provided at a middle position of the belt 3. An end portion of a support shaft 5 of the tension roller 4 is pivotally supported at the maintenance machine main body A and an end portion of a wire 7 is fixed to a middle portion of the support shaft 5 through a spring 6. Therefore, if the wire 7 is pulled, the support shaft 5 turns as shown in FIG. 2(b), the tension roller 4 presses the belt 3 to tense the loose belt 3, and power of the engine is transmitted to the transmission.

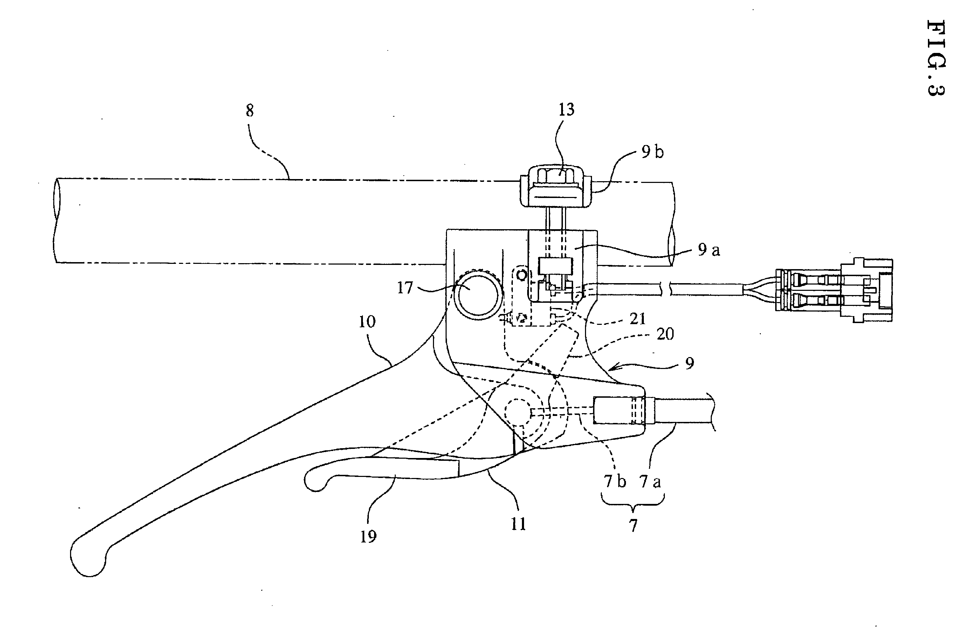

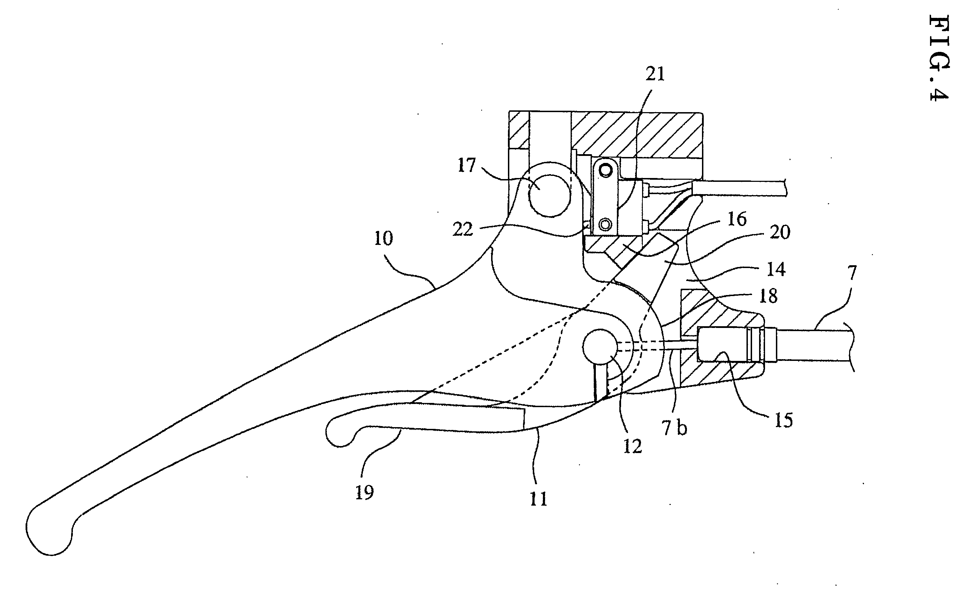

Next, a reference numeral 8 designates a handle and the handle 8 is provided with an automatic-locking lever device. As shown in FIGS. 3 and 4, the lever device is formed of a support member 9 fixed to the handle 8, a clutch lever 10 pivotally supported at the support member 9, a lock lever 11 for retaining the clutch lever 10 in a pulled state, and a switch 21 for enabling the engine to start when it detects that the clutch lever 10 is pulled. The other end portion of the wire 7 is attached to the clutch lever 10.

The wire 7 is formed of an outer wire 7a and an inner wire 7b and a cylindrical drum 12 is integrally formed with one end of the inner wire 7b.

The support member 9 is fixed to the handle 8 by fastening a mounting portion 9a formed at a base portion of the member 9 and a bolt receiving member 9b in contact with an outer face of the handle 8 on an opposite side with a bolt 13. The support member 9 is formed with a housing groove 14 for housing the clutch lever 10, a cylindrical portion 15 for housing the wire 7, and an engagement section 16 to be engaged with the lock lever 11.

A turning shaft 17 is inserted through a base portion of the clutch lever 10 and fixed to a side portion of the support member 9. As a result, the clutch lever 10 is supported for freely turning about the turning shaft 17.

The clutch lever 10 is formed with a recessed portion (not shown) for receiving the lock lever 11. The lock lever 11 is disposed in the recessed portion of the clutch lever 10 and supported for turning about the drum 12. One end side of the lock lever 11 forms a handhold portion 19 in such a way to overlap with the clutch lever 10. The other end of the lock lever 11 is formed with a protruding chip 20 and the protruding chip 20 protrudes from an arc portion 18 of the clutch lever 10 formed around the drum 12.

The outer wire 7a is housed in the cylindrical portion 15 of the support member 9, the inner wire 7b led out of a bottom wall of the cylindrical portion 15 is guided into the lock lever 11, and a tip end of the inner wire 7b is coupled to the lock lever 11 and the clutch lever 10 through the drum 12. Therefore, the lock lever 11 turns about the drum 12.

The engagement section 16 of the support member 9 is formed in the clutch lever housing groove 14 in the support member 9 and can be engaged with a tip end of the protruding chip 20 of the lock lever 11.

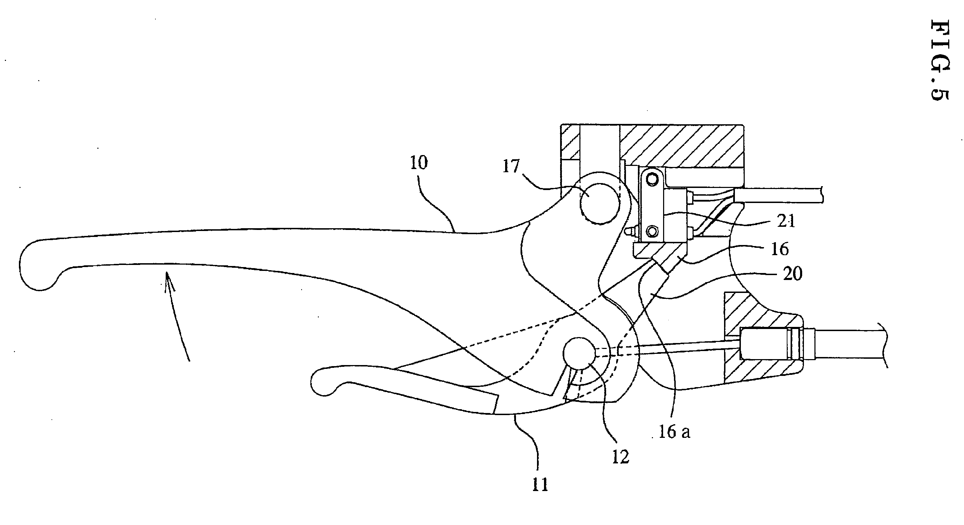

When the clutch lever 10 is pulled toward the handle 8, the wire 7 is pulled in a longitudinal direction together with the lock lever 11. At this time, the protruding chip 20 of the lock lever 11 is biased in such a direction as to turn toward the engagement section 16 by the wire 7. Therefore, if the clutch lever 10 is pulled toward the handle 8, the lock lever 11 is turned about the drum 12 by the wire 7 and the protruding chip 20 is automatically engaged with an engagement face 16a as shown in FIG. 5. As a result, three points of the engaged portion, the drum 12, and the turning shaft 17 are fixed and therefore the clutch lever 10 is locked in the pulled state. Then, if the lock lever 11 is pulled and turned about the drum 12 to cancel engagement between the protruding chip 20 and the engagement face 16a, the lock is released and the clutch lever 10 is pulled by the wire 7, turns in an opposite direction, and returns to an initial position in FIGS. 3 and 4 together with the lock lever 11.

On a back side of the engagement section 16, a limit switch 21 is provided. A contact 22 of the limit switch 21 is disposed to face a front end face of the clutch lever 10. The limit switch 21 is connected in such a manner as to open and close an ignition circuit for causing a spark plug of the engine to spark. If the switch is turned on, the ignition circuit is closed.

With the above structure of the clutch lever device, because the switch 21 is pushed by the clutch lever 10 and is in an ON state in an initial state in FIG. 4, the ignition circuit is closed and the engine can be started. If the clutch lever 10 is pulled after the start of the engine, the wire 7 is pulled and the tension roller 4 turns to tense the belt 3 as shown in FIG. 2 (b). As a result, the power of the engine is transmitted to the transmission to actuate the maintenance machine.

To stop actuation of the maintenance machine, the lock lever 11 is pulled to cancel the locked state. Then, the clutch lever 10 returns to the initial position in FIG. 3 together with the lock lever 11. As a result, the belt 3 is loosened, the power of the engine is not transmitted to the transmission, and actuation of the maintenance machine is stopped.

Next, if the engine is started by a starter or the like when the clutch lever 10 is in the locked state in FIG. 5, the spark plug is not allowed to spark and the engine cannot be started, because the switch is in an OFF state and detects the locked state in this state. Therefore, it is possible to prevent an unexpected accident due to sudden actuation of the maintenance machine before it happens.

It is also possible that the switch detects the locked state of the lock lever 11. For example, the contact of the limit switch may protrude from the engagement section 16 and may be pushed in when the lock lever 11 is in the locked state to thereby disable the start of the engine.

Moreover, it is also possible to utilize a reflective or transmission sensor in place of the limit switch to detect a position of the clutch lever or the lock lever.

### Brief Description of the Drawings

FIG. 1 is a side view of a maintenance machine.
FIGS. 2 (a) and 2(b) are enlarged views of a part of the maintenance machine. FIGS. 2 (a) and 2 (b) are explanatory views showing loose and tensed states of a belt before and after a wire of a tension roller is pulled.
FIG. 3 is a general view of a clutch lever device according to the invention.
FIG. 4 is a partial sectional view showing an inner mechanism of the clutch lever device.
FIG. 5 is a partial sectional view showing that a clutch lever of the clutch lever device is pulled and brought into a locked state.

### Explanation of Reference Numerals

- 7: wire
- 9: support member
- 10: clutch lever
- 11: lock lever
- 12: drum
- 16: engagement section
- 21: switch

## Claims

1. A clutch lever device in which a clutch lever for performing pulling operation of a control wire is pivotally supported at a support member fixed to a handle, a lock lever is supported by the clutch lever, and, when the clutch lever is pulled from an initial position, the lock lever is engaged with an engagement section of the support member to lock the clutch lever in a pulled state,
wherein a switch is provided at the support member and, when the switch detects that the clutch lever is in the locked state, the switch disables the start of an engine.

2. The clutch lever device according to claim 1,
wherein the switch detects that the lock lever in place of the clutch lever is in the locked state.
